# EUROPÄISCHE PATENTSCHRIFT

(11) **EP 4 164 193 B1**
(45) Veröffentlichungstag und Bekanntmachung des Hinweises auf die Patenterteilung: **09.12.2026**
(21) Anmeldenummer: 22199571.5
(22) Anmeldetag: 04.10.2022
(51) Int. Cl.: H04L 41/0866, H04L 67/12

(54) **TECHNIKEN ZUR BEREITSTELLUNG EINES VERBESSERTEN FUNKTIONSABLAUFS BEI NETZWERKGERÄTEN**
TECHNIQUES FOR PROVIDING IMPROVED OPERATIONAL FLOW TO NETWORK DEVICES
TECHNIQUES POUR FOURNIR UN FLUX DE FONCTIONS AMÉLIORÉ DANS DES DISPOSITIFS DE RÉSEAU

(30) Priorität: 05.10.2021 DE 102021125791
(43) Veröffentlichungstag der Anmeldung: 12.04.2023
(73) Patentinhaber: Deutsche Telekom AG, 53113 Bonn (DE)
(72) Erfinder: Albrecht, Robert Manfred, 26131 Oldenburg (DE); Renken, Matthias, 28357 Bremen (DE)
(74) Vertreter: karo IP

(56) Entgegenhaltungen:
- US-A1- 2004 029 575
- US-A1- 2006 072 471
- US-A1- 2019 173 684
- US-A1- 2021 152 434

## Beschreibung

Die Erfindung betrifft ein Verfahren, eine Netzwerkgerät, eine Netzwerk-Daten-Verteilungseinheit und ein Kommunikationssystem eines verbesserten Funktionsablaufs bei Netzwerkgeräten bei Anfragen aus einem Netzwerk, insbesondere dem Internet. Insbesondere betrifft die Erfindung Techniken zur Vermeidung von Ausführbarkeitsproblemen bei der Verwendung von Netzwerkgeräten.

Hintergrund der Erfindung:
Die Anzahl der Netzwerkgeräte, die heutzutage von Nutzern, insbesondere bei der Kommunikation über das Internet, verwendet werden, nimmt stetig zu. Hierbei handelt es sich auch zum großen Teil um Netzwerkgeräte, die zwar eine relativ kleine Rechenleistung und Speicherkapazität - im Vergleich zu herkömmlichen Desktoprechnern - aufweisen, aber dennoch immer mehr und immer komplexere Aufgaben übernehmen sollen. Unter Umständen ist es zum Zeitpunkt, wenn diese Netzwerkgeräte hergestellt werden, noch gar nicht absehbar, welche Anforderungen ein Nutzer bzw. das Netzwerk an diese kleineren Geräte, insbesondere IoT Geräte, stellen wird. Die US Patentanmeldung US2019/173684 A1 offenbart eine Architektur mit einem loT Gerätemanagementsyste mit loT Geräten, bei dem die Ermittlung und Speicherung der Fähigkeiten zentral im Managementsystem erfolgt, insbesondere durch Kommunikation über das Internet und Speicherung in der Datenbank des Managementsystems. Die US Patentanmeldung US2021/152434 A1 zeigt ein gatewaybasiertes Discovery-/Template-Konzept, wobei das Gateway Listen erstellt und das Management ein loT Template erzeugt, das an das Gateway übertragen wird; das Gateway beauftragt dann die loT-Geräte gemäß diesem loT Template. Nachteilig kann dies dazu führen, dass diese Netzwerkgeräte Stabilitätsprobleme bekommen, abstürzen o. ä. Fehlfunktion haben, sodass die Usability nachteilig beeinträchtigt wird. Mögliche Ursachen sind, dass an dieses Netzwerkgerät zu viele Anfragen, respektive Daten, oder auch falsche/fehlerhafte Daten übermittelt werden.

Dies soll anhand einiger Beispiele verdeutlicht werden:
Werden einer Webcam zu viele Anfragen gestellt, wird deren CPU- oder verfügbare Bandbreite überlastet.

Werden einer Webcam (zu viele) Anfragen nach maximaler Auflösung bei gleichzeitig maximaler Kompression und maximaler Transportverschlüsselung gestellt, wird die CPU der Webcam überlastet.

Wird einer Webcam eine Anfrage nach einem Codec gesendet, den sie nicht unterstützt oder der bekannterweise fehlerhaft ist, besteht eine hohe Gefahr, dass die Webcam abstürzt.

Es ist daher die Aufgabe der Erfindung Netzwerkgeräte, insbesondere IoT-Devices, weniger anfällig gegenüber Angriffen, Stabilitätsproblemen und/oder Ressourcenproblem zu machen.

Gelöst wird diese Aufgabe mit den Merkmalen der unabhängigen Ansprüche. Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist ein Verfahren zur Vermeidung von Ausführbarkeitsproblemen bei der Verwendung von Netzwerkgeräten, insbesondere von IoT Geräten gemäß Anspruch 1 angegeben. Erläuternd sei erwähnt, dass
die Aufgaben insbesondere technische Aufgaben sind, die technische Leistungsfähigkeiten des Netzwerkgeräts charakterisieren können. Beispielsweise könnte eine solche Aufgabe wie folgt formuliert werden: ein Funktionsprozess i kann von dem Netzwerk Endgerät n-mal ausgeführt werden. Konkret am Beispiel einer Webcam kann dies bedeuten: ein bietest schrieb mit einer bestimmten Auslösung kann n-mal übertragen werden. Hierbei kann es sich je nach Netzwerkgerät um verschiedene Aufgaben handeln für die das Netzwerkgerät bestimmt ist. In diesem Kontext könnten die Aufgaben auch als Funktionen bezeichnet werden, die vom dem Netzwerkgerät bereitgestellt werden. Eine Webcam bietet beispielsweise die Funktionalität einen Videostream aufzunehmen und gegebenenfalls über die Netzwerkumgebung zu versenden. In diesem Sinne ist dies die Aufgabe der Webcam. Netzwerkgeräte können im Allgemeinen aber mehr als eine einzige Aufgabe erfüllen, wobei diese Aufgaben in dem Aufgabenkatalog, der die Form einer Tabelle aufweisen kann, aufgelistet werden. In den Aufgabenkatalog werden nur solche Aufgaben aufgelistet von den bekannt oder zumindest zu vermuten ist, dass das Netzwerkgerät diese Aufgabe "fehlerfrei" ausführen kann. So kann der Aufgabenkatalog auch eine Obergrenze von bestimmten Aufgaben aufweisen, wobei eine einzelne diese Aufgaben an sich von dem Netzwerkgerät fehlerfrei ausführbar wäre, wobei aber eine Anzahl an auszuführenden Aufgaben, die die Obergrenze überschreitet, das Netzwerkgerät überlasten würde. Beispielsweise ist eine bestimmte Webcam in der Lage bis zu 5 Videostreams an die Netzwerkumgebung zu übertragen, wobei beispielsweise 6 Videostreams zu einer Überlastung der Webcam führen würden. Bei den Angaben zu den technischen Spezifikationen kann es sich beispielsweise um ein Betriebssystem des Netzwerkgerätes handeln, Angaben zu der Rechenleistung, Angaben zu der Speicherleistung und/oder Angaben zu den
bereitgestellten Funktionen des Netzwerkgeräts. Weiterhin sei erwähnt, dass der Aufgabenkatalog insbesondere bei der ersten Inbetriebnahme des Netzwerkgerätes von dem Netzwerkgerät selbst und/oder von einem Hersteller an die ihm zugeordnete Netzwerk-Daten-Verteilungseinheit gesendet werden kann. Das Netzwerkgerät kann prinzipiell direkt mit der Netzwerkumgebung verbunden werden, aber in einer alternativen Ausgestaltung auch alleine und/oder zusätzlich vermittels der Netzwerk-Daten-Verteilungseinheit. Ist das Netzwerkgerät lediglich vermittels der Netzwerk-Daten-Verteilungseinheit mit der Netzwerkumgebung verbunden, so durchqueren alle Anfragen von Aufgaben, die an das Netzwerkgerät gerichtet werden, zunächst die Netzwerk-Daten-Verteilungseinheit. Insbesondere handelt es sich in diesem Fall bei der Netzwerk-Daten-Verteilungseinheit um ein sogenanntes "Gateway". Eine mögliche Ausgestaltung eines solchen Gateways ist ein Internet-Router. Weiterhin sei erwähnt, dass
eine Anfrage mit zumindest einer Aufgabe, die das Netzwerkgerät ausführen soll, die Anfrage für nur eine einzige Aufgabe oder aber für eine Mehrzahl von gleichen und/oder unterschiedlichen Aufgaben umfassen kann, die insbesondere andere Nutzer über die Netzwerkumgebung an das Netzwerkgerät anfragen. Beispielsweise könnte die Anfrage lauten, dass eine Webcam fünf Videostreams aufnehmen und übertragen soll. Prinzipiell ist zum Zeitpunkt der Anfrage unklar, ob das Netzwerkgerät auch in der Lage ist diese Anfrage fehlerfrei auszuführen. Mögliche Gründe, die einer fehlerfreien Ausführung entgegenstehen können sind, dass die Anfrage aufgrund ihrer Quantität und/oder die Art der Aufgaben nicht für das Netzwerkgerät geeignet sind. Im Falle, dass der Algorithmus analysiert, ob die Anfrage basierend auf den technischen Spezifikationen des Netzwerkgeräts ausführbar ist, kann der Algorithmus beispielsweise berechnen, welche technischen Ressourcen die Anfrage verbrauchen würde und welche technischen Ressourcen basierend auf den bereitgestellten technischen Spezifikationen auf dem Netzwerkgerät vorhanden sind. Beispielsweise kann bestimmt werden, dass eine Anfrage zunächst den bereitgestellten Funktionen des Netzwerkgeräts entspricht und 20 % der Rechenleistung und 20 % des Speicherbedarfs beanspruchen würde. In diesem Fall kann der Algorithmus die Anfrage freigeben, da zu erwarten ist, dass diese vor dem Netzwerkgerät fehlerfrei ausgeführt werden kann. Zu diesem Zweck werden die aktiven Prozesse bzw. Anfragen des Netzwerkgeräts auf der Netzwerk-Daten-Verteilungseinheit gespeichert, sodass die Netzwerk-Daten-Verteilungseinheit analysieren kann, ob weitere eingehende Anfragen basierend auf den schon aktiven Prozessen ausführbar sind oder zu einer möglichen Überlastung des Netzwerkgeräts führen würden. Insbesondere kann in diesem Fall ein Regelmechanismus vorgesehen sein, der die Anfrage dahingehend optimiert, dass eine maximale Anzahl von Anfragen bearbeitet werden kann. In diesem Fall würden insbesondere die Prozesse abgelehnt werden, die die meisten Ressourcen des Netzwerkendgeräts verbrauchen würden; der Algorithmus kann insbesondere auf Machine-Learning Verfahren basieren und aus dem Verhalten der Netzwerkgeräte lernen, ob eine Anfrage ausführbar war oder nicht. Das neuronale Netzwerk auf dem der Algorithmus basiert wird dann also wie folgt trainiert. Ein Datensatz mit erfolgreich ausgeführten Anfragen wird als ausführbar, der also an das Netzwerkgerät übermittelt werden darf, markiert und ein Datensatz mit erfolglos ausgeführten Anfragen wird als nicht-ausführbar markiert. Auf diese Weise, wird der Algorithmus beständig besser und wird auch in der Lage sein, vielfältige Kombinationen von Anfragen effizient analysieren zu können.
Bei einer Übereinstimmung der Aufgaben Einträgen des Aufgabenkatalogs wird festgestellt, bzw. kann mit hoher Wahrscheinlichkeit angenommen werden, dass das Netzwerkgerät die Anfrage fehlerfrei ausführen kann. Durch die Weiterleitung der Aufgabe von der Netzwerk-Daten-Verteilungseinheit eines Netzwerk Endgerät, wird die Aufgabe dem Netzwerkgerät zugänglich gemacht und kann von diesem ausgeführt werden.

Vorteilhaft ergibt sich hierdurch eine Art Filterfunktion, sodass nur noch die Anfragen, respektive nur noch solche Aufgaben der Anfrage, an das Netzwerkgerät weitergeleitet werden, die das Netzwerkgerät auch verarbeiten kann. Hierdurch wird erreicht, dass eine Vielzahl an Angriffs- und Stabilitätsproblemen verhindert bzw. abgemildert werden können. Durch den Aufgabenkatalog und/oder durch die Übermittlung der technischen Spezifikationen ist quasi im Vorfeld bekannt, was das Netzwerkgerät verarbeiten kann und was nicht. In diesem Sinne werden "ungültige" Aufgaben schon im Vorfeld aussortiert, um sowohl die Netzwerkumgebung als auch das Netzwerkgerät zu schützen.

Eine Möglichkeit den Aufgabenkatalog der Netzwerk-Daten-Verteilungseinheit zu übermitteln ist vermittels einer Protokollerweiterung, ähnlich DHCP. Dies bietet den Vorteil, dass die entsprechenden Protokolle ohnehin gesendet werden. Alternativ ist auch möglich dezidierte Signale zu versenden, das den Aufgabenkatalog aufweist. Abstrakt technisch formuliert handelt es sich also bei dem Aufgabenkatalog um eine Datenstruktur. Weitere Nutzen der Erfindung sind eine Reduktion der Netzwerklast, Absicherung des Netzwerkgerätes bezüglich verschiedener Angriffsmuster, eine Verhinderung von denial-of-service Attacken und/oder eine Optimierung der Bandbreitennutzung.

Das Netzwerkgerät kann der ihm zugeordneten Netzwerk-Daten-Verteilungseinheit die Qualität und Quantität des erwarteten und/oder ausführbaren Netzwerkverkehrs als eine sogenannte NRP-Meldung, insbesondere in der Form der technischen Spezifikationen und/oder des Aufgabenkatalogs, mitteilen.

Bevorzugt umfasst der Aufgabenkatalog und/oder die technischen Spezifikationen Informationen über:
- Protokolle,
   o auf verschiedenen Layern (https, TCP, sftp); also insbesondere welche Layer von dem Netzwerkgerät ausführbar sind;
   o Mime-Types wie etwa Standard HD Stream; also insbesondere welche Mime-Types von dem Netzwerkgerät ausführbar sind;
- die Rechenleistung des Netzwerkgerätes;
   o Die Rechenleistung wird als Taktfrequenz meist in MHz (Megahertz oder Millionen Impulse pro Sekunde) oder in GHz (Gigahertz oder Milliarden Impulse pro Sekunde) angegeben. Aktuelle Computer erreichen einen Takt von mehreren GHz;
- Speicherplatz des Netzwerkgerätes, insbesondere als Angabe in byte;
- Betriebssystem des Netzwerkgerätes;
- Datenmengen und/oder
   o Anzahl der Datenpakete pro Zeit; die von dem Netzwerkgerät ausführbar sind;
   o Größe der Datenpakete, die von dem Netzwerkgerät ausführbar sind;
- Zeiten.
   ∘ Werktags;
   ∘ Wochenende;
   ∘ Uhrzeiten.
      ▪ Wenn bekannt ist, welcher Datenverkehr zu bestimmten Zeiten erwartet wird, kann Datenverkehr, der über diese Menge hinausgeht, entsprechend gefiltert werden.

Dies bietet den Vorteil, dass der Aufgabenkatalog eine umfassende Liste an Einträgen aufweisen kann, wobei die Einträge möglichst viele potentielle Anfragen, im Idealfall insbesondere alle, an das Netzwerkgerät gerichtete Aufgaben abdecken kann.

Zweckmäßigerweise wird der Aufgabenkatalog bei der Inbetriebnahme des Netzwerkgerätes, zu regelmäßigen bestimmten Zeiten und/oder auf Anforderung, respektive auf Initiative, des Netzwerkgerätes gesendet.

Das Senden des Aufgabenkatalogs und/oder der technischen Spezifikationen bei der Inbetriebnahme des Netzwerkgerätes hat den Vorteil, dass der Netzwerk-Daten-Verteilungseinheit möglichst früh die entsprechenden Daten zur Verfügung gestellt werden, sodass die Netzwerk-Daten-Verteilungseinheit ihre Filterfunktion ausüben kann. Das regelmäßige Versenden des Aufgabenkatalogs hat den Vorteil, dass beispielsweise auch Updates berücksichtigt werden können, die auf dem Netzwerkgerät durchgeführt werden. Ein solches Update kann zur Folge haben, dass sich der Aufgabenkatalog ändert. In diesem Sinne kann das Netzwerkgerät auch insbesondere auf seine eigene Initiative hin einen geänderten Aufgabenkatalog, insbesondere nach einem erfolgreichen Update, senden. In diesem Fall kann die Netzwerk-Daten-Verteilungseinheit möglichst früh nach einem Update den aktualisierten Aufgabenkatalog berücksichtigen.

In einem Ausführungsbeispiel sind der Aufgabenkatalog und/oder die technischen Spezifikationen ab Werk in dem Nutzerendgerät hinterlegt.

Dies hat den Vorteil, dass der Hersteller, der die Spezifikationen des Nutzerendgeräts festlegt und dadurch auch Kenntnis über die ausführbaren Aufgaben des Nutzerendgeräts hat auch zugleich den Aufgabenkatalog definieren kann. Dies erhöht die Wahrscheinlichkeit, dass tatsächlich nur solche Aufgaben in dem Aufgabenkatalog gelistet sind, die das Nutzerendgerät tatsächlich ausführen kann.

Bevorzugt wird der Aufgabenkatalog und/oder technischen Spezifikationen bei einem Update des Netzwerkgerätes aktualisiert.

Dies bietet den schon vorstehend erwähnten Vorteil, dass geänderte "Fähigkeiten" des Netzwerkgerätes berücksichtigt werden können.

Vorzugsweise wird der Aufgabenkatalog durch das Netzwerkgerät aus Erkenntnissen von Abarbeitungsdaten von zuvor an das Netzwerkgerät gestellte Aufgaben erstellt.

Dies bietet den Vorteil, dass das Gerät beispielsweise mittels eines entsprechend implementierten Algorithmus', erkennt, ob es eine Aufgabe fehlerfrei bearbeitet hat oder nicht. Ist kein Fehler aufgetreten, können Informationen bezüglich dieser Aufgabe extrahiert und in den Aufgabenkatalog geschrieben werden. Ist ein Fehler aufgetreten, kann das Netzwerkgerät den Aufgabenkatalog daraufhin durchsuchen, ob diese Aufgabe dennoch in dem Aufgabenkatalog gelistet ist und die entsprechende Aufgabe aus dem Aufgabenkatalog entfernen, sodass die Netzwerk-Daten-Verteilungseinheit diese Aufgabe nicht mehr an das Netzwerkgerät weiterleitet.

In einer möglichen Ausführungsform wendet die Netzwerk-Daten-Verteilungseinheit einen Standard-Filter zum Weiterleiten von Aufgaben an das Netzwerkgerät an, wenn das Netzwerkgerät keinen Aufgabenkatalog sendet und/oder keine technischen Spezifikationen vorhanden sind.

Dies bietet den Vorteil, dass der Standard-Filter wenigstens die Aufgaben abdeckt, die typischerweise von dem Netzwerkgerät ausgeführt werden können. Insbesondere ist es möglich den Standard-Filter für einen jeden Typ eines IoT Devices individuell vorzusehen, da beispielsweise eine typische Webcam andere Aufgaben erledigt als beispielsweise ein Temperatursensor. Wenn eine Policy das Melden von Netzwerkrestriktionen vorsieht, wird ein Netzwerkgerät, dass diese nicht meldet, vom Netz "getrennt".

Zweckmäßigerweise analysieren das Netzwerkgerät die von der Netzwerk-Daten-Verteilungseinheit weitergeleitete Aufgabe, insbesondere durch einen entsprechend implementierten Algorithmus, dahingehend, ob hinsichtlich der Aufgabe eine Übereinstimmung mit zumindest einer in dem Aufgabenkatalog gelisteten ausführbaren Aufgaben besteht und/oder auf die technischen Spezifikationen des Netzwerkgeräts ausreichen, um die Aufgabe auszuführen.

Dies bietet den Vorteil, dass eine zusätzliche Überprüfungsinstanz vorgesehen ist, die die an das Netzwerkgerät gestellt gerichteten Aufgaben auf ihre Ausführbarkeit hin analysiert. Beispielsweise für den Fall, dass die Filterfunktion der Netzwerk-Daten-Verteilungseinheit ausgefallen ist.

Das Netzwerkgerät wendet einen Notification- und/oder Sperrmechanismus an, wenn keine Übereinstimmung der weitergeleiteten Aufgabe mit zumindest einer in dem Aufgabenkatalog gelisteten ausführbaren Aufgaben besteht.

Die Anwendung des Sperrmechanismus hat den Vorteil, dass die Aufgabe nicht ausgeführt wird und das Gerät deswegen beispielsweise nicht abstürzen kann. Allerdings schont es die Ressourcen des Netzwerkgerätes und auch die Menge des Netzwerkverkehrs an sich, wenn die Filterfunktion schon von der Netzwerk-Daten-Verteilungseinheit ausgeführt wird. Der Notificationmechanismus hat den Vorteil, dass das Netzwerkgerät aktiv mitteilen kann, dass es eine nicht ausführbare Aufgabe erhalten hat.

In einer Ausführungsform sendet das Netzwerkgerät eine Updatepolicy, zum Beispiel eine PolicyStableTime in Tagen.

Gemäß einem zweiten Aspekt der Erfindung ist eine Netzwerk-Daten-Verteilungseinheit zur Vermeidung von Ausführbarkeitsproblemen bei Netzwerkgeräten gemäß Anspruch 9 angegeben.

Die Netzwerk-Daten-Verteilungseinheit ist insbesondere ein Gateway. Die erfindungsgemäße Netzwerk-Daten-Verteilungseinheit bietet im Wesentlichen die im Zusammenhang mit dem Verfahren genannten Vorteile, die sich ergeben, da nunmehr nur noch solche Aufgaben an das Netzwerkgerät weitergeleitet werden, die von diesem auch ausführbar sind. Insbesondere ist die Netzwerk-Daten-Verteilungseinheit auch eingerichtet und mit entsprechenden Mitteln ausgestattet, um die ihr zugeordneten Schritte des vorstehend beschriebenen Verfahrens ausführen zu können.

Gemäß einem dritten Aspekt der Erfindung ist ein Netzwerkgerät, insbesondere ein IoT Gerät, zur Vermeidung von Ausführbarkeitsproblemen, gemäß Anspruch 10 angegeben.

Das Netzwerkgerät ist insbesondere ein IoT Gerät, wie beispielsweise eine Webcam. Das erfindungsgemäße Netzwerkgerät bietet im Wesentlichen die im Zusammenhang mit dem Verfahren genannten Vorteile, die sich ergeben, dass das Netzwerkgerät mitteilen kann, welche Aufgaben es ausführen kann. Insbesondere ist das Netzwerkgerät auch eingerichtet und mit entsprechenden Mitteln ausgestattet, um die ihm zugeordneten Schritte des vorstehend beschriebenen Verfahrens ausführen zu können.

Gemäß einem vierten Aspekt der Erfindung ist ein Kommunikationssystem zur Vermeidung von Ausführbarkeitsproblemen von Netzwerkgeräten gemäß Anspruch 11 angegeben.

Insbesondere weist das Kommunikationssystem ein vorstehend beschriebenes Netzwerkgerät und/oder eine Netzwerk-Daten-Verteilungseinheit auf.

Im Folgenden wird ein bevorzugtes Ausführungsbeispiel der vorliegenden Erfindung unter Bezugnahme auf die begleitende Figur erläutert:
- Fig. 1:: zeigt das erfindungsgemäße Kommunikationssystem zur Vermeidung von Ausführbarkeit Problemen von Netzwerkgeräten.
- Fig. 2:: zeigt schematisch, wie Anfragen an das Netzwerkgerät gefiltert werden.
- Fig. 3:: zeigt schematisch, wie ein neuronales Netzwerk trainiert wird, das ermitteln soll, ob eine Anfrage an das Netzwerk bereit ausführbar ist.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies im Schutzbereich der unabhängigen und abhängigen Ansprüche 1-11 liegt.

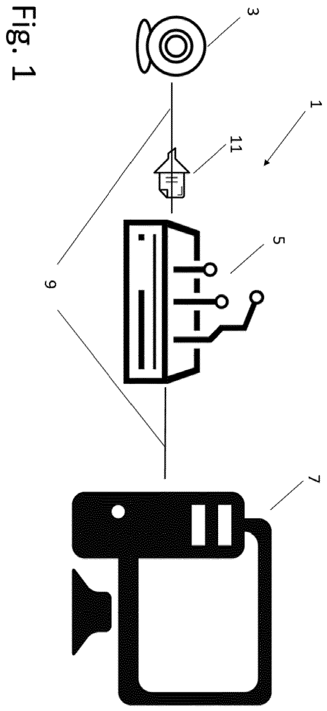

Fig. 1 zeigt das erfindungsgemäße Kommunikationssystem 1 zur Vermeidung von Ausführbarkeitsproblemen von Netzwerkgeräten.

Wenn im Kontext dieser Erfindung von einer an ein Netzwerkgerät 3 gerichtete Aufgabe gesprochen wird, so ist der Begriff Aufgabe als eine Anfrage, insbesondere als eine technische Anfrage, an das Netzwerkgerät 3 zu verstehen.

Das Kommunikationssystem 1 weist auf: Das Netzwerkgerät 3, exemplarisch ausgebildet als eine Webcam 3, eine Netzwerk-Daten-Verteilungseinheit 5, exemplarisch ausgebildet als ein Gateway 5, und ein Endgerät 7, exemplarisch ausgebildet als ein Computer 7, mit dem Nutzeranfragen an das Netzwerkgerät 3 gesendet werden können. Die Webcam 3, das Gateway 5 und der Computer 7 sind über eine Netzwerkumgebung 9, insbesondere dem Internet 9, miteinander verbunden, wobei die Webcam 3 vermittels des Gateways 5 indirekt mit dem Computer 7 verbunden ist. Anfragen die von dem Computer 7 an die Webcam 3 gerichtet sind, durchlaufen demnach das Gateway 5.

Auf dem Gateway 5 ist ein Aufgabenkatalog und/oder technische Spezifikationen der Webcam 3 vorgehalten, wobei der Aufgabenkatalog solche Aufgaben auflistet, die durch die Webcam 3 technisch ausführbar sind. Das Gateway 5 empfängt an die Webcam 3 gerichtete Aufgaben in Form einer Anfrage und analysiert diese Aufgaben mittels eines geeigneten Algorithmus dahingehend, ob hinsichtlich der Aufgabe eine Übereinstimmung mit zumindest einer in dem Aufgabenkatalog gelisteten ausführbaren Aufgaben besteht und/oder ob die Anfrage basierend auf den technische Spezifikationen der Webcam 3 der webcam ausführbar sind.

Stellt der Algorithmus fest, dass die Anfrage Aufgaben aufweist, die in dem Aufgabenkatalog gelistet sind und/oder dass die Anfrage technisch basierend auf den technischen Spezifikationen ausführbar ist, leitet das Gateway 5 die Aufgaben, die mit der Liste und/oder den technischen Spezifikationen übereinstimmen an die Webcam 3 zur Abarbeitung weiter. In diesem Sinne weist das Gateway 5 eine Filterfunktion 11 auf.

Hierdurch ist also sichergestellt, dass nur solche Aufgaben an die Webcam 3 weitergeleitet werden, die die Webcam 3 auch verarbeiten kann. Hieraus folgen folgende technische Vorteile: eine Reduktion der Netzwerklast, eine Absicherung des Netzwerkgerätes bezüglich verschiedener Angriffsmuster, eine Verhinderung von denial-of-service Attacken und/oder eine Optimierung der Bandbreitennutzung.

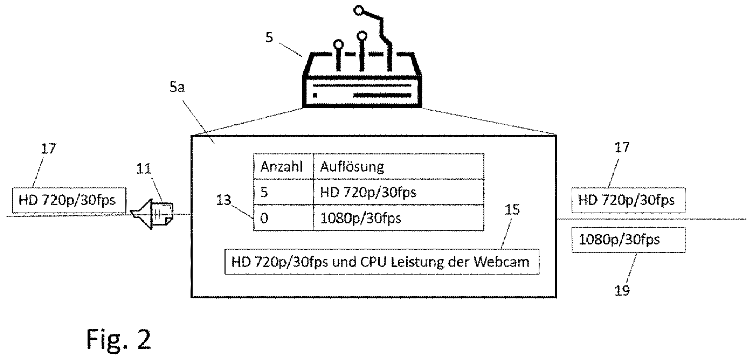

Fig. 2 zeigt schematisch die Filterfunktion der Netzwerk-Daten-Verteilungseinheit 5, also im vorliegenden Fall des Gateways 5.

In einem Speichermodul 5a des Gateways 5 ist der Aufgabenkatalog 13 und/oder die technischen Spezifikationen 15 des Netzgerätes 3, also in diesem Ausführungsbeispiel der Webcam 3, hinterlegt. Ein auf dem Gateway 5 implementierte Algorithmus kann zur Auswertung, ob eine Anfrage von der Webcam 3 bearbeitet werden kann auf den Aufgabenkatalog 13 und/oder die technische Spezifikation 15 zur Analyse zurückgreifen.

In Fig. 2 werden zwei verschiedene Anfragen an die Webcam 3 gestellt. Eine erste Anfrage 17 betrifft die Übertragung eines Videostreams von der Webcam 3 mit einer Auflösung von 720p/30fps und eine zweite Anfrage 19 die Übertragung eines Videostreams von der Webcam 3 mit einer Auflösung von 1080p/30fps.

Der Algorithmus stellt basierend auf den Informationen des Aufgabenkatalogs 13 und/oder der technischen Spezifikation 15 fest, dass lediglich die erste Anfrage 17 der Auflösung von 720p/30fps von der Webcam 3 ausführbar ist.

In der Folge bewirkt das Gateway 5 die Filterfunktion 11 und leitet lediglich die erste Anfrage 17 mit der Auflösung von 720p/30fps an die Webcam weiter.

Unter Umständen ist es nicht einfach im Vorfeld abzusehen, welche Kombinationen an verschiedenartigen Anfragen ein Netzwerkgerät 3 technisch ausführen kann. Zu diesem Zweck zweckmäßig sein, den Algorithmus als neuronales Netzwerk auszubilden, der basierend auf den technischen Spezifikationen 15 ermittelt welche Anfragen bzw. welche Kombination von Anfragen ausführbar sind. Zu diesem Zweck hatte Algorithmus auch Kenntnis davon, welche Anfragen aktuell schon vor dem Netzwerkgerät 3 ausgeführt werden, sodass eine neue Anfrage adäquat berücksichtigt werden kann.

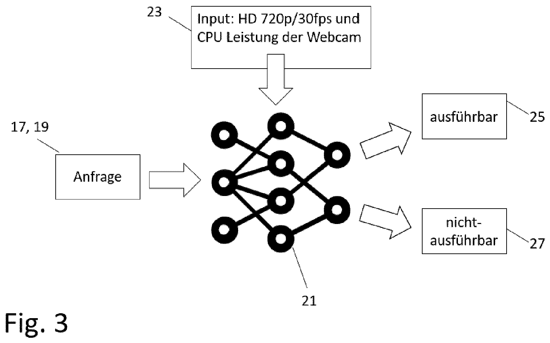

Fig. 3 zeigt schematisch, wie das neuronale Netzwerk, oft auch als künstliche Intelligenz bezeichnet, in einem solchen Fall trainiert werden kann.

Beim Überwachten Lernen wird dem neuronale Netzwerk ein Eingangsmuster gegeben und die Ausgabe, die das neuronale Netz in seinem aktuellen Zustand produziert, mit dem Wert verglichen, den es eigentlich ausgeben soll. Durch Vergleich von Soll- und Istausgabe kann auf die vorzunehmenden Änderungen der Netzkonfiguration geschlossen werden. Bei einlagigen Perzeptrons kann die Delta-Regel (auch Perzeptron-Lernregel) angewendet werden. Mehrlagige Perzeptrons werden in der Regel mit Backpropagation trainiert, was eine Verallgemeinerung der Delta-Regel darstellt.

Im konkreten Fall kann ein neuronales Netzwerk 21 der Algorithmus Netzwerk-Daten-Verteilungseinheit 5 wie folgt trainiert werden:
Für jede technische Spezifikation und/oder für eine Klasse von Netzwerkgeräten 3 kann ein eigenes neuronales Netzwerk 21 angelegt werden. In diesem Sinne könne die technischen Spezifikationen als Input 23 für das neuronale Netzwerk 21 angesehen werden.

Eine Anfrage 17, 19 wird dann dem neuronalen Netzwerk übergeben und es wird dann markiert, ob die Anfrage und dem Netzwerkgerät 3, insbesondere basierend auf sein technischen Spezifikationen, ausführbar 25 ist oder nicht-ausführbar 27 ist. Je mehr solche verschiedenartige Anfragen 17, 19 dem neuronale Netzwerk 21 übergeben werden, desto besser kann das dann trainierte neuronale Netzwerk 21 vorhersagen, ob eine Anfrage 17, 19 ausführbar ist oder nicht und seine Filterfunktion ausüben.

Gegebenenfalls kann das neuronale Netzwerk so auf der Netzwerk-Daten-Verteilungseinheit 5 eingestellt sein, dass das Training automatisiert erfolgt. Dies kann wie folgt funktionieren: Die Netzwerk-Daten-Verteilungseinheit 5 empfängt eine Anfrage für das Netzwerkgerät 3, extrahiert die Parameter dieser Anfrage und leitet die Anfrage an das Netzwerkgerät 3 weiter.

Erfolgt keine anfragengemäße Antwort des Netzwerkgeräts 3 auf die Anfrage hin, so wird die Anfrage als nicht-ausführbar 27 markiert und das neuronale Netzwerk 21 hierdurch trainiert. Erfolgt eine anfragengemäße Antwort des Netzwerkgeräts 3 auf die Anfrage hin, so wird die Anfrage als ausführbar 25 markiert und das neuronale Netzwerk 21 hierdurch trainiert.

Im konkreten Fall der Webcam 3 könnte das bedeuten, dass die Anfrage 17 nach einem Videostream mit HD 720p/30fps als anfragengemäße Antwort eben diesen Videostream liefert und die Anfrage 17 deshalb als ausführbar markiert wird.

Durch eine solche Feedbackschleife wird die Filterfunktion 11 automatisiert beständig besser an die technischen Fähigkeiten der Webcam 3 angepasst.

## Patentansprüche

1. Verfahren zur Vermeidung von Ausführbarkeitsproblemen bei der Verwendung von Netzwerkgeräten, insbesondere von IoT Geräten, aufweisend die folgenden Schritte:
• Implementierung eines Netzwerkgeräts (3) in eine Netzwerkumgebung (9);
• Vorhalten und/oder Erstellen eines Aufgabenkatalogs (13) des Netzwerkgeräts, wobei der Aufgabenkatalog (13) solche Aufgaben auflistet, die durch das Netzwerkgerät (3) ausführbar sind, und zusätzlich vorhalten und/oder erstellen technischer Spezifikationen (15) des Netzwerkgeräts (3);
• Versenden des Aufgabenkatalogs und der technischen Spezifikationen an eine Netzwerk-Daten-Verteilungseinheit (5), wobei die Netzwerk-Daten-Verteilungseinheit (5) das Netzwerkgerät (3) mit der Netzwerkumgebung (9) verbindet, wobei der Aufgabenkatalog und die technischen Spezifikationen in einem Speichermodul (5a) der Netzwerk-Daten-Verteilungseinheit hinterlegt wird;
• Empfangen an der Netzwerk-Daten-Verteilungseinheit (5) zumindest einer Anfrage (17, 19) mit zumindest einer Aufgabe, die das Netzwerkgerät (3) ausführen soll, wobei ein auf der Netzwerk-Daten-Verteilungseinheit (5) implementierter Algorithmus die Anfrage dahingehend analysiert, ob hinsichtlich der Aufgabe eine Übereinstimmung mit zumindest einer in dem Aufgabenkatalog (13) gelisteten ausführbaren Aufgaben besteht und ob die Anfrage basierend auf den technischen Spezifikationen (15) des Netzwerkgeräts (3) ausführbar ist;
• Weiterleiten der angefragten Aufgabe an das Netzwerkgerät (3), wenn die angefragte Aufgabe als eine ausführbare Aufgabe in dem Aufgabenkatalog (13) gelistet ist und wenn der Algorithmus bestimmt, dass die Anfrage basierend auf den technischen Spezifikationen (15) des Netzwerkgerätes (3) technisch ausführbar ist.

2. Verfahren nach Anspruch 1, **dadurch gekennzeichnet, dass** der Aufgabenkatalog (13) und/oder die technischen Spezifikationen (15) Informationen umfasst über:
• Protokolle,
• die Rechenleistung des Netzwerkgerätes,
• Speicherplatz des Netzwerkgerätes,
• Betriebssystem des Netzwerkgerätes,
• Datenmengen und/oder
• Zeiten.

3. Verfahren nach einem der vorhergehenden Ansprüche, **dadurch gekennzeichnet, dass** der Aufgabenkatalog (13) und/oder die technischen Spezifikationen (15) bei der Inbetriebnahme des Netzwerkgerätes (3) gesendet wird, zu regelmäßigen bestimmten Zeiten und/oder auf Anforderung des Netzwerkgerätes (3).

4. Verfahren nach einem der vorhergehenden Ansprüche, **dadurch gekennzeichnet, dass** der Aufgabenkatalog (13) und/oder die technischen Spezifikationen (15) ab Werk in dem Nutzerendgerät (3) hinterlegt ist.

5. Verfahren nach einem der vorhergehenden Ansprüche, **dadurch gekennzeichnet, dass** der Aufgabenkatalog (13) und/oder die technischen Spezifikationen (15) bei einem Update des Netzwerkgerätes (3) aktualisiert wird.

6. Verfahren nach einem der vorhergehenden Ansprüche, **dadurch gekennzeichnet, dass** der Aufgabenkatalog (13) durch das Netzwerkgerät (3) aus Erkenntnissen von Abarbeitungsdaten von zuvor an das Netzwerkgerät (3) gestellte Anfragen (17, 19) erstellt wird.

7. Verfahren nach einem der vorhergehenden Ansprüche, **dadurch gekennzeichnet, dass** die Netzwerk-Daten-Verteilungseinheit (5) einen Standard-Filter zum Weiterleiten von Aufgaben an das Netzwerkgerät anwendet, wenn das Netzwerkgerät keinen Aufgabenkatalog (13) und/oder keine technischen Spezifikationen (15) sendet.

8. Verfahren nach einem der vorhergehenden Ansprüche, **dadurch gekennzeichnet, dass** das Netzwerkgerät (3) die von der Netzwerk-Daten-Verteilungseinheit (5) weitergeleitete Aufgabe dahingehend analysiert, ob hinsichtlich der Aufgabe eine Übereinstimmung mit zumindest einer in dem Aufgabenkatalog (13) gelisteten ausführbaren Aufgaben besteht.

9. Netzwerk-Daten-Verteilungseinheit zur Vermeidung von Ausführbarkeitsproblemen Netzwerkgeräten, aufweisend
einen Kommunikationskanal, eingerichtet zur Datenkommunikation mit einer Netzwerkumgebung (9), insbesondere dem Internet, und einem Netzwerkgerät (3), insbesondere einem IoT Gerät (3);
eine Speichereinheit (5a), zur Abspeicherung eines Aufgabenkatalogs (13) und von technischen Spezifikationen (15) eines Netzwerkgeräts (3), wobei der Aufgabenkatalog (13) und/oder die technischen Spezifikationen (15) der Netzwerk-Daten-Verteilungseinheit (5) bereitgestellt wird, insbesondere wird der Aufgabenkatalog und/oder die technischen Spezifikationen von dem Netzwerkgerät (3) bereitgestellt;
einen Prozessor mit einem Algorithmus, wobei der Algorithmus programmiert ist, um zumindest eine an das Netzwerkgerät (3) gerichtete empfangene Anfrage (17, 19) mit Einträgen des Aufgabenkatalogs (13) zu vergleichen, ob hinsichtlich der empfangenen Aufgabe eine Übereinstimmung mit zumindest einer in dem Aufgabenkatalog gelisteten ausführbaren Aufgaben besteht und der Algorithmus programmiert ist zu analysieren, ob die an das Netzwerkgerät gerichtete Anfrage (17, 19) basierend auf den technischen Spezifikationen (15) des Netzwerkgeräts (3) ausführbar ist,
wobei die Netzwerk-Daten-Verteilungseinheit (5) zum Weiterleiten der empfangenen Anfrage (17, 19) eingerichtet ist, wenn der Algorithmus feststellt, dass die angefragte Anfrage (17, 19) als eine ausführbare Aufgabe in dem Aufgabenkatalog gelistet und basierend auf den technischen Spezifikationen (15) von dem Netzwerkgerät (3) als ausführbar markiert ist.

10. Netzwerkgerät zur Vermeidung von Ausführbarkeitsproblemen, aufweisend
einen Kommunikationskanal, eingerichtet zur Datenkommunikation mit der Netzwerk-Daten-Verteilungseinheit nach Anspruch 9 ;
einen Prozessor, wobei der Prozessor zum Erzeugen und Versenden eines Aufgabenkatalogs (13) und/oder technischen Spezifikationen (15) des Netzwerkgerät (3) eingerichtet ist, wobei der Aufgabenkatalog solche Aufgaben auflistet, die durch das Netzwerkgerät (3) ausführbar sind,
wobei das Netzwerkgerät eingerichtet ist einen Notification- und/oder Sperrmechanismus anzuwenden, wenn keine Übereinstimmung der weitergeleiteten Aufgabe mit zumindest einer in dem Aufgabenkatalog (13) gelisteten ausführbaren Aufgaben besteht und/oder wenn die weitergeleitete Aufgabe gemäß den technischen Spezifikationen (15) nicht-ausführbar ist.

11. Kommunikationssystem zur Vermeidung von Ausführbarkeitsproblemen von Netzwerkgeräten (3), wobei das Kommunikationssystem eingerichtet ist zur Ausführung des Verfahrens nach einem der Ansprüche 1-8.

## Claims

1. A method for avoiding feasibility problems when using network devices, in particular IoT devices, comprising the following steps:
• implementing a network device (3) in a network environment (9);
• maintaining and/or creating a task catalogue (13) of the network device, wherein the task catalogue (13) lists such tasks that are executable by the network device (3), and additionally maintaining and/or creating technical specifications (15) of the network device (3);
• sending the task catalogue and the technical specifications to a network data distribution unit (5), wherein the network data distribution unit (5) connects the network device (3) to the network environment (9), wherein the task catalogue and the technical specifications are stored in a storage module (5a) of the network data distribution unit;
• receiving, at the network data distribution unit (5), at least one request (17, 19) comprising at least one task that the network device (3) is to execute, wherein an algorithm implemented on the network data distribution unit (5) analyzes the request as to whether, with regard to the task, there is a match with at least one executable task listed in the task catalogue (13) and whether the request is executable based on the technical specifications (15) of the network device (3);
• forwarding the requested task to the network device (3) if the requested task is listed as an executable task in the task catalogue (13) and if the algorithm determines that the request is technically executable based on the technical specifications (15) of the network device (3).

2. The method according to claim 1, **characterized in that** the task catalogue (13) and/or the technical specifications (15) comprise information concerning:
• protocols,
• the computing power of the network device,
• storage space of the network device,
• operating system of the network device,
• data volumes and/or
• times.

3. The method according to any one of the preceding claims, **characterized in that** the task catalogue (13) and/or the technical specifications (15) are sent upon commissioning of the network device (3), at regular specified times and/or upon request of the network device (3).

4. The method according to any one of the preceding claims, **characterized in that** the task catalogue (13) and/or the technical specifications (15) are stored in the user terminal device (3) at the factory.

5. The method according to any one of the preceding claims, **characterized in that** the task catalogue (13) and/or the technical specifications (15) are updated upon an update of the network device (3).

6. The method according to any one of the preceding claims, **characterized in that** the task catalogue (13) is created by the network device (3) from findings obtained from processing data of requests (17, 19) previously submitted to the network device (3).

7. The method according to any one of the preceding claims, **characterized in that** the network data distribution unit (5) applies a standard filter for forwarding tasks to the network device if the network device does not send a task catalogue (13) and/or technical specifications (15).

8. The method according to any one of the preceding claims, **characterized in that** the network device (3) analyzes the task forwarded by the network data distribution unit (5) as to whether, with regard to the task, there is a match with at least one executable task listed in the task catalogue (13).

9. A network data distribution unit for avoiding feasibility problems with network devices, comprising
a communication channel configured for data communication with a network environment (9), in particular the Internet, and a network device (3), in particular an IoT device (3);
a storage unit (5a) for storing a task catalogue (13) and technical specifications (15) of a network device (3), wherein the task catalogue (13) and/or the technical specifications (15) are provided to the network data distribution unit (5), in particular the task catalogue and/or the technical specifications are provided by the network device (3);
a processor comprising an algorithm, wherein the algorithm is programmed to compare at least one received request (17, 19) directed to the network device (3) with entries of the task catalogue (13) as to whether, with regard to the received task, there is a match with at least one executable task listed in the task catalogue, and the algorithm is programmed to analyze whether the request (17, 19) directed to the network device is executable based on the technical specifications (15) of the network device (3),
wherein the network data distribution unit (5) is configured to forward the received request (17, 19) if the algorithm determines that the requested request (17, 19) is listed as an executable task in the task catalogue and is marked as executable by the network device (3) based on the technical specifications (15).

10. A network device for avoiding feasibility problems, comprising a communication channel configured for data communication with the network data distribution unit according to claim 9;
a processor, wherein the processor is configured to create and send a task catalogue (13) and/or technical specifications (15) of the network device (3), wherein the task catalogue lists such tasks that are executable by the network device (3),
wherein the network device is configured to apply a notification and/or blocking mechanism if there is no match between the forwarded task and at least one executable task listed in the task catalogue (13) and/or if the forwarded task is non-executable according to the technical specifications (15).

11. A communication system for avoiding feasibility problems of network devices (3), wherein the communication system is configured to perform the method according to any one of claims 1-8.

## Revendications

1. Procédé permettant d'éviter des problèmes d'exécutabilité lors de l'utilisation d'appareils réseau, en particulier d'appareils IoT, comportant les étapes suivantes :
• implémentation d'un appareil réseau (3) dans un environnement de réseau (9) ;
• maintenance et/ou création d'un catalogue de tâches (13) de l'appareil réseau, le catalogue de tâches (13) répertorie les tâches qui peuvent être exécutées par l'appareil réseau (3), et en supplément maintenance et/ou création de spécifications techniques (15) de l'appareil réseau (3) ;
• envoi du catalogue de tâches et des spécifications techniques à une unité de distribution de données de réseau (5), l'unité de distribution de données de réseau (5) connectant l'appareil réseau (3) à l'environnement de réseau (9), le catalogue de tâches et les spécifications techniques étant enregistrés dans un module de stockage (5a) de l'unité de distribution de données de réseau ;
• réception, sur l'unité de distribution de données de réseau (5), d'au moins une requête (17, 19) avec au moins une tâche que l'appareil réseau (3) est censé exécuter, un algorithme implémenté sur l'unité de distribution de données de réseau (5) analysant la requête pour savoir s'il existe une correspondance avec au moins une tâche exécutable répertoriée dans le catalogue de tâches (13) en ce qui concerne la tâche et si la requête peut être exécutée sur la base des spécifications techniques (15) de l'appareil réseau (3) ;
• transfert de la tâche demandée à l'appareil réseau (3) lorsque la tâche demandée est répertoriée comme une tâche exécutable dans le catalogue de tâches (13) et lorsque l'algorithme détermine que la requête est peut être exécutée techniquement sur la base des spécifications techniques (15) de l'appareil réseau (3).

2. Procédé selon la revendication 1, **caractérisé en ce que** le catalogue de tâches (13) et/ou les spécifications techniques (15) comprennent des informations sur :
• des protocoles,
• la puissance de calcul de l'appareil réseau,
• l'espace de stockage de l'appareil réseau,
• le système d'exploitation de l'appareil réseau,
• des quantités de données et/ou
• des moments.

3. Procédé selon l'une des revendications précédentes, **caractérisé en ce que** le catalogue de tâches (13) et/ou les spécifications techniques (15) sont envoyés lors de la mise en service de l'appareil réseau (3), à des moments déterminés réguliers et/ou à la demande de l'appareil réseau (3).

4. Procédé selon l'une des revendications précédentes, **caractérisé en ce que** le catalogue de tâches (13) et/ou les spécifications techniques (15) sont enregistrés en usine dans le terminal utilisateur (3).

5. Procédé selon l'une des revendications précédentes, **caractérisé en ce que** le catalogue de tâches (13) et/ou les spécifications techniques (15) sont mis à jour lors d'une mise à jour de l'appareil réseau (3).

6. Procédé selon l'une des revendications précédentes, **caractérisé en ce que** le catalogue de tâches (13) est créé par l'appareil réseau (3) à partir de connaissances de données de traitement provenant de requêtes (17, 19) précédemment adressées à l'appareil réseau (3).

7. Procédé selon l'une des revendications précédentes, **caractérisé en ce que** l'unité de distribution de données de réseau (5) applique un filtre standard pour le transfert de tâches à l'appareil réseau lorsque l'appareil réseau n'envoie aucun catalogue de tâches (13) et/ou aucune spécification technique (15).

8. Procédé selon l'une des revendications précédentes, **caractérisé en ce que** l'appareil réseau (3) analyse la tâche transférée par l'unité de distribution de données de réseau (5) pour déterminer s'il existe une correspondance avec au moins une tâche exécutable répertoriée dans le catalogue de tâches (13) en ce qui concerne la tâche.

9. Unité de distribution de données de réseau permettant d'éviter des problèmes d'exécutabilité, comportant
un canal de communication mis au point pour la communication de données avec un environnement de réseau (9), en particulier Internet, et un appareil réseau (3), en particulier un appareil IoT (3) ;
une unité de stockage (5a) pour sauvegarder un catalogue de tâches (13) et des spécifications techniques (15) d'un appareil réseau (3), le catalogue de tâches (13) et/ou les spécifications techniques (15) étant fournis à l'unité de distribution de données de réseau (5), en particulier le catalogue de tâches et/ou les spécifications techniques étant fournis par l'appareil réseau (3) ;
un processeur avec un algorithme, l'algorithme étant programmé pour comparer au moins une requête (17, 19) reçue adressée à l'appareil réseau (3) avec des entrées du catalogue de tâches (13) pour déterminer s'il existe une correspondance avec au moins une tâche exécutable répertoriée dans le catalogue de tâches en ce qui concerne la tâche reçue et l'algorithme étant programmé pour analyser si la requête (17, 19) adressée à l'appareil réseau peut être exécutée sur la base des spécifications techniques (15) de l'appareil réseau (3),
l'unité de distribution de données de réseau (5) étant mise au point pour transférer la requête (17, 19) reçue lorsque l'algorithme constate que la requête (17, 19) demandée est répertoriée comme une tâche exécutable dans le catalogue de tâches et est marquée comme étant exécutable par l'appareil réseau (3) sur la base des spécifications techniques (15).

10. Appareil réseau permettant d'éviter des problèmes d'exécutabilité, comportant
un canal de communication mis au point pour la communication de données avec l'unité de distribution de données de réseau selon la revendication 9 ;
un processeur, le processeur étant mis au point pour générer et envoyer un catalogue de tâches (13) et/ou des spécifications techniques (15) de l'appareil réseau (3), le catalogue de tâches répertoriant les tâches qui peuvent être exécutées par l'appareil réseau (3),
l'appareil réseau étant mis au point pour appliquer un mécanisme de notification et/ou de blocage lorsqu'il n'existe aucune correspondance entre la tâche transférée et au moins une tâche exécutable répertoriée dans le catalogue de tâches (13) et/ou lorsque la tâche transférée n'est pas exécutable conformément aux spécifications techniques (15).

11. Système de communication pour éviter des problèmes d'exécutabilité d'appareils réseau (3), le système de communication étant mis au point pour exécuter le procédé selon l'une des revendications 1 à 8.
